# EUROPEAN PATENT APPLICATION

(11) **EP 3 006 787 A1**
(43) Date of publication of application: **13.04.2016**
(21) Application number: 14807123.6
(22) Date of filing: 05.06.2014
(51) Int. Cl.: F16J 9/12, B21H 1/06, B21J 5/08, B21J 5/10, B21K 1/18, C21D 1/06, C21D 9/40, C22C 38/00, C22C 38/32, C22C 38/46, F02F 5/00, F16J 9/26

(54) **PISTON RING, RAW MATERIAL THEREFOR, AND PRODUCTION METHOD FOR BOTH**

(30) Priority: 07.06.2013 JP 2013120497; 05.12.2013 JP 2013252020; 06.03.2014 JP 2014043753
(71) Applicant: Kabushiki Kaisha Riken, Chiyoda-ku, Tokyo 102-8202 (JP)
(72) Inventor: KAWANISHI, Minoru, Kashiwazaki-shi Niigata 945-8555 (JP); KAKEGAWA, Satoru, Kashiwazaki-shi Niigata 945-8555 (JP); SHIMA, Yuji, Kashiwazaki-shi Niigata 945-8555 (JP)
(74) Representative: Schwabe - Sandmair - Marx
(86) International application number: PCT/JP2014/065010
(87) International publication number: WO 2014/196614

(57) **Abstract**

To provide a large, light-weight, low-tension steel ring contributing to improvement in fuel efficiency and having excellent wear resistance and scuffing resistance, and its blank body and their production methods, steel comprising C, Si, Mn and Cr as indispensable alloy elements, and Ni, V, Mo and V as optional alloy elements, and having adjusted thermal conductivity and/or thermal sag resistance is subjected to hot forging including ring rolling, to form a cylindrical steel body, from which a large steel ring having a nominal diameter d1 of 200 mm or more and less than 1100 mm, and reduced ring width h1 and radial thickness a1 is obtained.

## Description

### FIELD OF THE INVENTION

The present invention relates to a piston ring (hereinafter referred to as "ring"), particularly to a large steel piston ring (hereinafter referred to as "large ring," and its blank, and their production methods.

### BACKGROUND OF THE INVENTION

Large rings used in large diesel engines are mostly made of cast iron having excellent heat resistance and wear resistance. However, large diesel engines tend to be required to have higher power and efficiency (CO₂ reduction) because more attention is recently paid to global environmental problems. Specifically, the use environment of diesel engines has been getting severer, because of increased effective pressure and maximum cylinder pressure , increased stress applied by increased thermal load, increased average piston speeds, etc. For example, compacted vermicular (CV) graphite cast iron positioned between flaky graphite cast iron having excellent sliding properties and spheroidal graphite cast iron having excellent strength have been used for top rings in low-speed, two-stroke diesel engines.

In general, cast iron comprising graphite dispersed in its structure has excellent sliding properties such as scuffing resistance, as well as excellent thermal conductivity. However, its strength is not sufficient in severer use environment, attracting attention to fatal defects such as the breakage of piston rings.

Materials for small piston rings in automobile engines have been getting changed from cast iron to steel, and most top rings are now made of martensitic stainless steel subjected to nitriding or ion plating (for example, CrN, TiN, etc.). Such top rings are generally produced by a coiling process for forming a free ring shape from a martensitic stainless steel wire drawn to have a predetermined cross section shape.

However, because large rings in marine engines, etc. have large cross section areas, steel rod wires having larger cross section areas should be used. Because it is not easy to handle rod wires having large cross section areas, needing larger rolling mill and heat treatment apparatus, steel has not been used for large rings. It is particularly difficult to produce thin rings enabling weight and tension reduction, because of difficult precise forming. Though JP 6-221436 A discloses a cast-steel-made piston ring obtained by forming a special steel to a ring shape by a casting method, a method of producing such a cast-steel-made piston ring without suffering casting defects such as shrinkage cavity and pinholes is difficult to carry out, because of material properties. As a result, such cast-steel-made piston rings are not put into practical use because of lack of reliability.

### OBJECT OF THE INVENTION

In view of the above problems, an object of the present invention is to provide a large steel ring with reduced weight and tension for improving fuel efficiency, as well as excellent wear resistance and scuffing resistance, and its blank, and their production methods.

### DISCLOSURE OF THE INVENTION

The inventors have conducted intensive research on a production method capable of producing a large ring using steel, the thermal sag resistance and thermal conductivity, and the reduction of a ring width h1 and a radial thickness a1. As a result, the present invention has been achieved.

Thus, the piston ring of the present invention is a large piston ring having a nominal diameter d1 of 200 mm or more and less than 1100 mm, which is formed from a hot-forged cylindrical steel body.

The piston ring preferably has a ring width h1 and a nominal diameter d1 meeting the relation of 1 x 10⁻² < h1/d1 < 1.8 x 10⁻². The piston ring preferably has a radial thickness a1 and a nominal diameter d1 meeting the relation of 2 x 10⁻² < a1/d1 < 2.8 x10⁻². The ring width h1, the radial thickness a1 and the nominal diameter d1 preferably meet the relation of 2 x 10⁻⁴ < (h1 x a1)/(d1)² < 5 x 10⁻⁴.

In the piston ring, a ratio (Ft/d1) of the tangential force Ft to the nominal diameter d1 is preferably 0.1-0.25 N/mm.

A base material of the piston ring is preferably steel selected from carbon steel, low-alloy steel, spring steel, bearing steel, and martensitic stainless steel.

The base material preferably has a composition comprising by mass 0.2-1.0% of C, 0.1-1.0% of Si, 0.1-1.0% of Mn, 10-20% of Cr, 0-0.6% ofNi, 0-1.5% of Mo, and 0-0.15% of V, the balance being Fe and inevitable impurities. The base material preferably has a microstructure comprising chromium carbide dispersed in tempered martensite. The piston ring preferably has thermal sag resistance of 4% or less.

The base material preferably has a composition comprising by mass 0.45-1.10% of C, 0.15-1.60% of Si, 0.30-1.15% of Mn, 0.50-1.60% of Cr, 0-0.25% of V, 0-0.35% of Mo, and 0-0.005% of B, the balance being Fe and inevitable impurities.

The base material preferably has thermal conductivity of 30 W/mK or more.

The base material preferably has a microstructure comprising carbide dispersed in tempered martensite. The piston ring preferably has thermal sag resistance of 8% or less.

The piston ring is preferably provided on its outer peripheral sliding surface with one or more coating layers selected from the group consisting of a nitrided layer, a plating layer, a thermally sprayed layer, a chemical conversion treatment layer, and an ion-plated layer.

The piston ring is preferably provided on its side surfaces with one or more coating layers selected from the group consisting of a nitrided layer, a plating layer, and a chemical conversion treatment layer.

The piston ring blank of the present invention is a cylindrical steel body for a large piston ring having a nominal diameter d1 of 200 mm or more and less than 1100 mm, the cylindrical steel body having a structure having fiber flow in a circumferential direction.

The piston ring blank preferably has a non-circular cross section perpendicular to its axis when used for a compression ring, and comprises pluralities of valleys at constant axial intervals at least on its outer peripheral surface when used for an oil ring.

The method of the present invention for producing a large piston ring having a nominal diameter d1 of 200 mm or more and less than 1100 mm comprises
a first hot-forging step of heating a columnar steel block cut to a predetermined length, and upsetting it to a disc-shaped body by pressing;
a second hot-forging step of forming a recess in a center portion of the disc-shaped body by a core punch, and boring the recess to form a first cylindrical body;
a third hot-forging step of expanding the diameter of the first cylindrical body by a ring-rolling mill to form a second cylindrical body; and
a step of machining the second cylindrical body to a piston ring.

The second cylindrical body is preferably pressed in a direction perpendicular to its axis after the third hot-forging step, so that the second cylindrical body has a non-circular cross section perpendicular to the axis.

It is preferable to use a shaped roll in the third hot-forging step, so that the second cylindrical body has pluralities of valleys at constant axial intervals at least on the outer peripheral surface.

### BRIEF DESCRIPTION OF THE DRAWINGS

Fig. 1 is an axial plan view showing a typical piston ring with its cross-sectional view in a tangent direction perpendicular to the axis.
Fig. 2 is a schematic cross-sectional view along a center axis showing the change of a work shape in the production method of a piston ring according to the present invention.
Fig. 3 is a view schematically showing ring rolling in the third hot-forging step.
Fig. 4 is a view schematically showing the change of a cylindrical body from a circular cross section to a non-circular cross section, by hot-forging pressing in a direction perpendicular to its axis.
Fig. 5 is a view showing an example of special joint shape (double-step joint) used in a compression piston ring.
Fig. 6(a) is a view showing the distribution of an equal contact pressure of a piston ring.
Fig. 6(b) is a view showing the distribution of a contact pressure of a piston ring, which is smaller in a gap direction than in a direction perpendicular to the gap.
Fig. 7(a) is a cross-sectional view showing an oil control ring.
Fig. 7(b) is a cross-sectional view showing an oil control ring with a coil expander.
Fig. 8 is a cross-sectional view showing another oil control ring with a coil expander.
Fig. 9 is a view showing a second cylindrical body having pluralities of valleys at constant axial intervals on its outer and inner peripheral surfaces.

### DESCRIPTION OF THE PREFERRED EMBODIMENTS

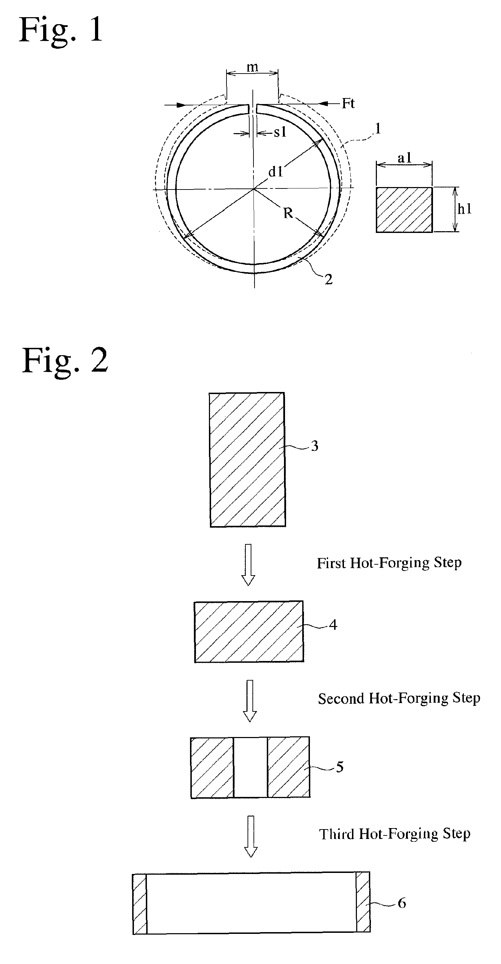

Fig. 1 is an axial plan view showing a typical piston ring having a nominal diameter d1, a ring width h1 (axial direction) and a radial thickness a1, together with its radial cross-sectional view. A free shape of the piston ring 1 is depicted by broken lines, and a shape of the piston ring 2, which is attached to a piston and inserted into a cylinder having a nominal diameter d1, is depicted by solid lines. The gap size is "m" in a free state, and "s1" when inserted into a cylinder. Because the gap size is reduced from "m" to "s1" when a piston ring 1 is inserted into a cylinder, a tangential force Ft is generated. This tangential force Ft makes it possible to keep sealing between the cylinder and the piston.

The piston ring of the present invention is a large piston ring having a nominal diameter d1 of 200 mm or more and less than 1100 mm, which is formed from a hot-forged cylindrical steel body. It is higher in strength than conventional piston rings of cast iron or cast steel, free from breakage even at a larger nominal diameter d1 and a smaller ring width h1. However, too small a ring width h1 results in easy twisting, resulting in poor parallelism or unevenness. Accordingly, h1/d1 is preferably more than 1 x 10⁻². On the other hand, too large a ring width h1 fails to make the ring sufficiently thinner than conventional cast iron piston rings, resulting in limited effects by tension reduction. Accordingly, h1/d1 is preferably less than 1.8 x 10⁻².

The radial thickness a1 does not affect contact pressure and a friction force, but has a close relation to the tangential force Ft and the conformability K of a ring. Accordingly, a ratio (a1/d1) of the radial thickness a1 to the nominal diameter d1 is preferably more than 2 x 10⁻² to provide the piston ring with a desired tangential force Ft, and less than 2.8 x 10⁻² to achieve improved conformability and excellent sealability. As a whole, a ratio of the product (h1 x a1) of the ring width h1 and the radial thickness a1 to the square (d1²) of the nominal diameter d1 is preferably more than 2 x 10⁻⁴ and less than 5 x 10⁻⁴.

The piston ring of the present invention generates contact pressure due to an inherent tangential force Ft, when assembled in a cylinder. This contact pressure has close influence on sealability between a piston and a cylinder, oil consumption, wearing, and friction loss. To achieve low fuel consumption and low friction, low contact pressure is selected. However, because sealability and oil consumption cannot be neglected, a predetermined level of contact pressure should be maintained. In the present invention, a ratio (Ft/d1) of the tangential force Ft to the nominal diameter d1 is preferably 0.1-0.25 N/mm, more preferably 0.1-0.2 N/mm.

Though not restrictive, steel used for the piston ring of the present invention is preferably selected from carbon steel, low-alloy steel, spring steel, bearing steel, and martensitic stainless steel. The carbon steel is preferably high-carbon steel containing about 0.6-0.8% by mass of C. The spring steel is preferably SUP9, SUP10, SUP12, etc. The bearing steel is preferably SUJ2. The martensitic stainless steel is preferably SUS420J2 or SUS440B. Suitable steel materials are selected depending on required properties such as high-temperature strength, thermal conductivity, thermal sag resistance, etc.

For example, the thermal sag resistance of a large piston ring should be 15% or less when made of gray cast iron (flaky graphite cast iron), and 10% or less when made of spheroidal graphite cast iron, according to JIS B 8037-5: 1998. The thermal sag is a phenomenon that a piston ring suffers degraded sealing properties by tension decrease due to creeping during use at high temperatures, and the thermal sag resistance is evaluated by a tangential force reduction ratio (%) after heating at 300°C for 3 hours in a state where the ring is closed to the nominal diameter. In a case where a ring is made of steel, however, the thermal sag resistance is not regulated, because piston rings having nominal diameters of 200 mm or more are not actually put into practical use (produced). It is preferable that the piston ring of the present invention also has thermal sag resistance of 10% or less, on the same level as that of spheroidal graphite cast iron. The thermal sag resistance can be improved by adjusting the composition, even with reduced ring width h1 and radial thickness a1. The composition can be adjusted to provide thermal sag resistance of less than 8%, less than 6%, or less than 5%.

With respect to thermal conductivity, it is said that conventional large rings basically made of cast iron have relatively good thermal conductivity. According to Mineda, et al. [SOKEIZAI, Vol. 50 (2009), No. 12, pp. 48-51], for example, the thermal conductivity is 48 W/mK in flaky graphite cast iron, 38 W/mK in CV graphite cast iron, and 30 W/mK in spheroidal graphite cast iron. These values are 50-140% higher than the thermal conductivity (20 W/mK) of 17Cr martensitic stainless steel used for top rings of automobiles. In general, because the thermal conductivity of a metal is mainly determined by the motion of free electrons in crystal grains, less solid solution elements provide higher thermal conductivity. Accordingly, steel would be able to have as high thermal conductivity as that of cast iron, if the amounts of solid solution elements were adjusted, but it is also necessary to keep necessary mechanical properties. When the thermal conductivity is important, a target of the present invention is the thermal conductivity of a cast iron piston ring. The thermal conductivity is preferably 30 W/mK or more, more preferably 38 W/mK or more, further preferably 48 W/mK or more.

To provide the piston ring of the present invention with excellent thermal sag resistance, the base material preferably has a composition comprising by mass 0.2-1.0% of C, 0.1-1.0% of Si, 0.1-1.0% of Mn, 10-20% of Cr, 0-0.6% ofNi, 0-1.5% of Mo, and 0-0.15% of V, the balance being Fe and inevitable impurities (hereinafter referred to as "first composition"). To provide the piston ring with excellent thermal conductivity, the base material preferably has a drastically reduced amount of Cr, specifically a composition comprising by mass 0.45-1.10% of C, 0.15-1.60% of Si, 0.30-1.15% ofMn, 0.50-1.60% of Cr, 0-0.25% of V, 0-0.35% of Mo, and 0-0.005% of B, the balance being Fe and inevitable impurities (hereinafter referred to as "second composition").

These base materials contain C, Si and Mn, basic alloy elements of steel, and Cr, as indispensable alloy elements. Cr forms carbide and a substitutional solid solution in Fe, thereby improving corrosion resistance, and thermal sag resistance by solid solution strengthening. C forms an interstitial solid solution in Fe to improve the hardness of the matrix, and is easily combined with Cr, Mo and V to form carbides, thereby improving wear resistance and scuffing resistance. Si and Mn are added as deoxidizers. Further, Ni, Mo, V and B may be selectively added, if necessary. Ni may be added to improve corrosion resistance. V may be added to provide steel with a fine microstructure, thereby making it tougher, and form high-hardness carbide. Mo and B may be added to increase the hardenability of steel. Particularly, Mo may be added to increase high-temperature strength. In general, steel contains P and S each less than 0.03% by mass as inevitable impurities.

Particularly in a piston ring material having excellent thermal conductivity, it is preferable for improved thermal conductivity that Si is 0.15-0.35%, and C is 0.45-0.65%; it is preferable for improved wear resistance and nitriding characteristics that C is 0.95-1.10%, Cr is 0.80-1.60%, and V is 0.15-0.25%; and Cr is more preferably 1.30-1.60%. As a whole, a base material of the piston ring having excellent thermal conductivity preferably has a composition comprising by mass 0.45-0.55% of C, 0.15-0.35% of Si, 0.65-0.95% of Mn, 0.80-1.10% of Cr, and 0.15-0.25% of V, the balance being Fe and inevitable impurities (hereinafter referred to as "third composition"), or a composition comprising by mass 0.95-1.10% of C, 0.15-0.35% of Si, 0.30-0.50% of Mn, and 1.30-1.60% of Cr, the balance being Fe and inevitable impurities (hereinafter referred to as "fourth composition").

The piston ring of the present invention is preferably subjected to quenching and tempering, to have a microstructure of tempered martensite in which carbides including fine chromium carbide are dispersed. The precipitation of carbides including chromium carbide suppresses the movement of dislocation and creep even at 300°C, contributing to improvement in thermal sag resistance. The thermal sag resistance is preferably 4% or less in a material having the first composition of the present invention, and 8% or less in a material having the second composition of the present invention. The thermal conductivity is preferably 30W/mK or more in a material having the second composition of the present invention.

Because the piston ring of the present invention is made of steel, it is poorer, as it is, in sliding properties such as scuffing resistance than cast iron piston rings. However, such problems have been overcome by recently developed surface treatment technologies. Thus, the piston ring of the present invention is preferably provided on its outer peripheral sliding surface with one or more coating layers selected from the group consisting of a nitrided layer, a plating layer, a thermally sprayed layer, a chemical conversion treatment layer, and an ion-plated layer. Also, it is preferably provided on its side surfaces with one or more coating layers selected from the group consisting of a nitrided layer, a plating layer, and a chemical conversion treatment layer.

Because the material having the first composition of the present invention contains 10-20% by mass of Cr, it also acts as a promising steel for nitriding. Though large rings conventionally have hard chromium plating on the side surfaces, nitriding, if possible, would replace hard chromium plating, contributing to cost reduction. Of course, the present invention does not exclude hard chromium plating. The nitriding may be salt bath nitrocarburizing, gas nitriding, soft nitriding, or plasma nitriding, which may be preferably carried out in a range of 450-600°C for 1-12 hours. By nitriding, Cr carbide in steel is easily reacted with N intruding from the surface, forming hard CrN particles dispersed in a nitrided layer, which remarkably improve the wear resistance and scuffing resistance of a sliding surface. Mo selectively used in the above material improves wear resistance and scuffing resistance as a carbide-forming element, and acts to prevent softening due to a nitriding temperature. Mo plays an important role for the dimensional stability of a ring. V makes crystal grains finer to provide high toughness, and improves the hardness of a nitrided layer as a nitriding-accelerating element.

Among the surface treatments, the plating layer includes a hard chromium plating layer, a multi-layer chromium plating layer, and a composite dispersion nickel plating layer; the thermally sprayed layer includes a thermally sprayed molybdenum coating and a thermally sprayed cermet coating; the chemical conversion treatment layer includes an iron oxide coating and a phosphate coating; and the ion-plated layer includes a CrN or TiN film.

The arc ion plating is conducted by introducing a nitrogen (N₂) gas into a vacuum chamber, generating arc on a Cr metal cathode (target) surface of an evaporation source to instantaneously melt a metal Cr, and ionizing it in nitrogen plasma (N*), thereby forming Cr³⁺ ions or CrN reacted with N* which are attracted onto the piston ring surface by negative bias voltage applied to a piston ring, to form a film. In the arc ion plating, a high ionization ratio of a Cr metal is achieved by a high energy density, resulting in a high film-forming speed. Thus, a coating of 10-80 µm required for piston rings can be industrially formed. Hard chromium nitride formed by the arc ion plating may have a single phase of CrN, Cr₂N or Cr, or a composite phase of (CrN + Cr₂N), (Cr₂N + Cr), (CrN + Cr₂N + Cr), or (CrN + Cr), depending on the control of treatment conditions such as arc current, atmospheric pressure, bias voltage, etc. The hard chromium nitride coating formed in the present invention is preferably based on chromium nitride of CrN and/or Cr₂N, which are 50% or more by volume.

The method of the present invention for producing a piston ring comprises a first hot-forging step of heating a columnar steel block cut to a predetermined length, and upsetting it to a disc-shaped body by pressing; a second hot-forging step of forming a recess in a center portion of the disc-shaped body by a core punch, and boring the recess to provide a first cylindrical body; a third hot-forging step of expanding the diameter of the first cylindrical body by a ring-rolling mill to form a second cylindrical body; and a step of machining the second cylindrical body to a piston ring.

Fig. 2 is a schematic cross-sectional view along a center axis showing the change of a work shape in the production method of the present invention. The production method of the present invention comprises a first hot-forging step of forming a columnar steel block 3 into a columnar steel body 4, a second hot-forging step of forming the columnar steel body 4 into a first cylindrical body 5, and a third hot-forging step of forming the first cylindrical body 5 into a second cylindrical body 6.

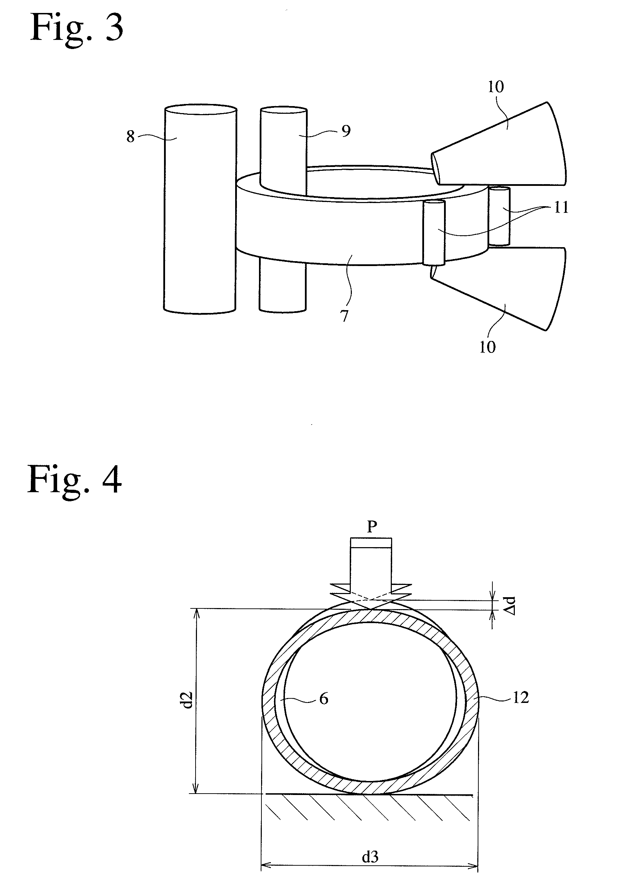

The third hot-forging step uses a ring-rolling mill schematically shown in Fig. 3. The ring-rolling mill comprises a main roll 8, a mandrel 9, axial rolls 10, backup rolls 11, etc. The main roll 8 is driven at a constant number of rotations, while the mandrel 9, the axial rolls 10 and the backup rolls 11 follow the rotation by friction with a work 7. In the ring rolling, the ring is basically compressed in a radial direction between the main roll 8 and the mandrel 9, so that the work 7 is expanded in diameter to desired shape and size, while being made thinner. The axial size of the work 7 is adjusted by a gap between a pair of axial rolls 10, and the roundness and surface conditions of the work 7 are adjusted by pluralities of backup rolls 11.

The second cylindrical body 6, 12 formed by the above ring rolling is machined to a piston ring. In this machining step, for example, the turning of inner, peripheral and end surfaces, cutting-off by a bite or a blade, side surface grinding, cutting or milling to provide a gap, contouring turning using a cam, the grinding and buffing of an outer peripheral surface, the slot cutting of an oil ring, etc. may be conducted.

Particularly in four-stroke diesel engines, large rings are categorized to compression rings and oil rings, like small rings. The compression ring has such a non-circular free shape (cam shape) that contact pressure is generated by an inherent tangential force when inserted into a cylinder, and the oil ring mostly provided with a tension-applying coil expander has a substantially circular free shape.

In the piston ring of the present invention, the compression ring should be a so-called single-piece type, which has an inherent tangential force for expanding the ring radially outward to seal a gas when inserted into a cylinder with its gap closed. Ring rolling in the third hot-forging step is basically a process of forming a circular ring. To have an inherent tangential force, as shown in Fig. 4, the second cylindrical body 6 formed in the third hot-forging step is preferably deformed to a non-circular, free-shaped body 12. Though so-called free forging with no constraint in other directions than the pressing direction is shown in Fig. 4, die forging using lower and/or upper dies having predetermined elliptical shapes may be used. To provide the cylindrical body 12 with an elliptical cross section having a minor diameter d2 and a major diameter d3, the temperature, the pressure P, and the reduction amount Δd are adjusted. d3/d2 is preferably 1.005-1.05, more preferably 1.01-1.03.

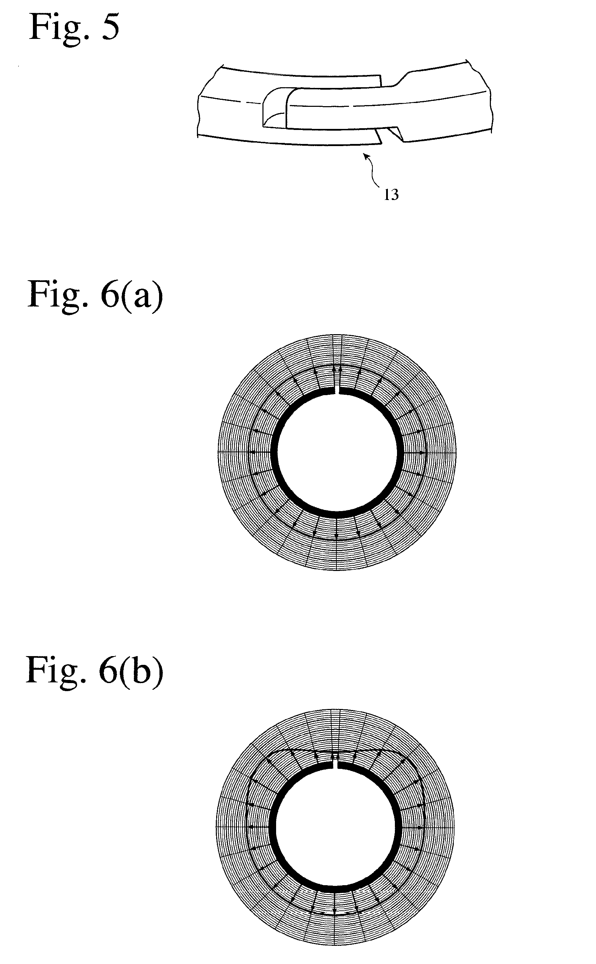

The deformation of the circular piston ring to a non-circular (elliptical), free-shaped piston ring can be achieved by conducting a heat treatment with a joint piece of a predetermined size inserted into a gap. However, in the case of a special joint such as a double-step joint 13 shown in Fig. 5, it is impossible to produce a large compression ring only by a heat treatment for deformation, because abutment end portions are overlapped. To produce a large ring having a special joint, the ring blank should be in a free shape. From this aspect, the second cylindrical body 6 as a ring blank is preferably deformed to a non-circular, free-shaped body 12.

A contact pressure distribution in the compression ring inserted into a cylinder is determined depending on the performance of an engine. The contact pressure distribution is basically isopressure distribution as shown in Fig. 6(a). However, in a contact pressure distribution in a large ring likely suffering scuffing in abutment end portions, contact pressure in a gap direction is preferably lower than contact pressure in a direction perpendicular to the gap, as shown in Fig. 6(b). In a two-stroke engine, in which rings slide on ports, too, this contact pressure distribution is preferably used, to reduce friction in port frames, and to prevent rings from detaching from the ports.

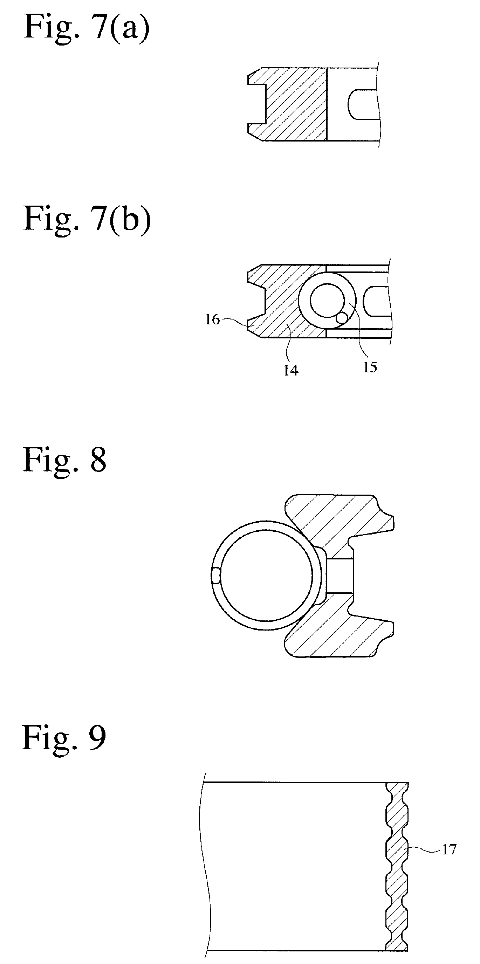

In the piston ring of the present invention, the oil ring is categorized to a single-piece oil ring having an inherent tangential force as shown in Fig. 7(a), and a two-piece oil ring having a coil expander as shown in Fig. 7(b).

The oil ring having a coil expander is constituted by an oil ring body 14 having a pair of axially separate rail portions 16, 16 slidably engageable with an inner surface of a cylinder, and a coil expander 15 received in an inner groove of the oil ring body 14 for pushing the oil ring body radially outward.
The oil ring body 14 needs not have an inherent tangential force, and thus a non-circular free shape, because the coil expander 15 exerts tension.

Rather, to exhibit excellent oil-scraping performance, the oil ring body 14 is required to have excellent followability so that it can sufficiently follow the contour of a cylinder wall during the operation of an engine. The conformability of a ring is expressed by a conformability coefficient K = 3·Ft·d1²/(E·h1·a1³), wherein Ft is the inherent tangential force of a ring, d1 is a nominal diameter, E is a Young's modulus, h1 is a ring width, and a1 is a radial thickness. This formula indicates that the conformability of a ring is inversely proportional to the size, particularly the cube of the radial thickness a1, of a ring body. Accordingly, the radial thickness a1 is preferably as small as possible. Ultimately, the ring is preferably in a shape shown in Fig. 8, which may be called "I-shape." In the production method of the piston ring of the present invention, it is preferable to use such a shaped roll as to form the second cylindrical body having pluralities of valleys at constant axial intervals at least on an outer peripheral surface, thereby obtaining a ring blank body having a shape as close to that of the oil ring shown in Figs. 7(a), 7(b) and 8 as possible. The second cylindrical body shown in Fig. 9 has pluralities of valleys at constant axial intervals on both outer and inner peripheral surfaces. In this case, it is preferable to use a shaped roll and a mandrel.

The temperature of the work in the above hot-forging step may be selected depending on a material used. For example, when steel having the first or second composition is used, the temperature of the work is in a range of preferably 850-1250°C, more preferably 900-1100°C.

The second cylindrical body 6, 12, 17 produced by ring rolling is preferably annealed to remove internal stress after forging, and subjected to the spheroidization of cementite to improve machinability. After annealing, shot blasting is preferably conducted to remove oxide scale, and then to remove a decarburized surface layer. The second cylindrical body is preferably cut to a predetermined width to obtain pluralities of rings by a bite or a blade, after removing the decarburized layer.

The resultant ring body is formed by a high-strength material free from defects, because of fiber flow in a circumferential direction obtained by ring rolling. To provide the piston ring with desired properties such as thermal sag resistance, etc., it is preferable to conduct quenching and tempering. When the ring body is made of steel having the first composition, the quenching temperature is preferably 900-1150°C, and the tempering temperature is preferably 580-600°C. When the ring body is made of steel having the second composition, the quenching temperature is preferably 800-1100°C, and the tempering temperature is preferably 470-550°C. By these heat treatments, steel having the first composition has a microstructure comprising fine chromium carbide particles dispersed in tempered martensite, exhibiting Vickers hardness Hv of 250-420, and modulus of 190 GPa or more, and steel having the second composition has a microstructure comprising fine carbide particles dispersed in tempered martensite, exhibiting Vickers hardness Hv of 430-500, and modulus of 190 GPa or more.

### Example 1

A steel rod of SUS420J2 having an outer diameter of 110 mm and a length of 200 mm was heated to 1000°C, pressed to a disc-shaped body having an outer diameter of about 165 mm and a height of about 90 mm, and then provided with a recess in a center portion by a core punch. The recess was turned to a penetrating hole to provide a first cylindrical body having an outer diameter of about 180 mm and an inner diameter of about 50 mm. The first cylindrical body was heated again by a high-frequency induction heating apparatus, and ring-rolled by a ring-rolling mill to form a second cylindrical body having an outer diameter of about 364 mm, an inner diameter of about 332 mm, and a width of about 110 mm. This second cylindrical body was annealed at 790°C for 10 hours, shot-blasted to remove oxide scale, roughly machined on its inner and outer peripheral surfaces to a non-circular shape (elliptical shape, etc.) having a major diameter of 362 mm and a minor diameter of 356 mm, and then radially cut to obtain eight non-circular rings.

Each of the non-circular rings was quenched from 900°C, tempered at 490°C for 3 hours, and finished-machined to a compression ring having a nominal diameter d1 of 350 mm, a rectangular cross section having a ring width h1 of 5 mm and a radial thickness a1 of 9.5 mm, a barrel-shaped outer peripheral surface, and a double-step joint shape. The ring was provided with a nitrided layer of about 70 µm on its entire surface by gas nitriding at 460°C for 5 hours, and further with a cermet layer of about 500 µm comprising fine Cr carbide particles dispersed in a Ni alloy matrix on its outer peripheral surface by high-velocity flame spraying of SM5241 powder of Sulzer Metco. The thermally sprayed layer was finish-ground to thickness of about 350 µm. A compound layer (white layer) formed by gas nitriding on the surface was removed by grinding before spraying. The tangential force Ft was adjusted to 70 N to have contact pressure of 0.08 MPa.

### [1] Measurement of weight

Eight compression rings of Example 1 were measured with respect to weight by an electronic balance and averaged. Their average weight was 397 g.

### [2] Measurement of unevenness

A load of 5 N was applied to five points (two points at abutment end portions, and one point at each of 90°, 180° and 270° from the gap) on each ring of Example 1 placed on a flat table, to measure unevenness in both radial and circumferential directions. The unevenness is defined as the unintentional deviation of a side surface of a ring from a surface parallel to a datum surface (JIS B 8037-2), and used to evaluate the unintentional twisting of a ring. The unevenness in the radial direction is the maximum of deviations measured at four points centrally between the above loaded points on an upper side surface of the ring at a load of about 1 N, using a spherical indenter having a radius of 1.5 ± 0.05 mm. The unevenness in the circumferential direction is difference between the maximum deviation and the minimum deviation measured in the middle of the ring wall and centrally between the above loaded points. In Example 1, the unevenness was 0.011 mm in the radial direction, and 0.044 mm in the circumferential direction.

### Comparative Example 1

Compression rings each having a nominal diameter d1 of 350 mm, a rectangular cross section having a ring width h1 of 7 mm and a radial thickness a1 of 10.5 mm, a barrel-shaped outer peripheral surface, and a double-step joint shape, were produced in the same manner as in Example 1 except for forming a CV graphite cast iron body corresponding to a second cylindrical body by casting a cast iron melt having a composition comprising by mass 3.8% of C, 2.6% of Si, 0.5% of Mn, 0.04% ofP, 0.01% of S, 0.09% of Cr, 0.88% ofNi, 0.06% of V, and 2.42% of Cu, and omitting nitriding and thermal spraying. The ring of Comparative Example 1 had weight of 611 g. In Comparative Example 1, too, the tangential force Ft was adjusted to 98 N to have contact pressure of 0.08 MPa. The same unevenness measurement as in Example 1 revealed that the unevenness was 0.005 mm in the radial direction, and 0.026 mm in the circumferential direction. Though the unevenness of Comparative Example 1 was about 40-55% smaller than that of Example 1 because of cast iron, the ring of Example 1 was about 35% lighter in weight than that of Comparative Example 1.

### Example 2

A second cylindrical body having an outer diameter of about 368 mm, an inner diameter of about 339 mm and a width of about 120 mm was produced by ring rolling from steel having the same composition as in Example 1, heated again, and then pressed in a direction perpendicular to its axis to form a non-circular cylindrical body having a major diameter of 370 mm and a minor diameter of 364 mm. In the pressing, upper and lower dies each having a predetermined elliptical shape were used. As in Example 1, the non-circular cylindrical body was annealed, shot-blasted to remove oxide scale, machined on inner and outer peripheral surfaces simultaneously, and then radially cut to obtain eight non-circular rings. Quenching, tempering, finish machining, nitriding and thermal spraying were conducted in the same manner as in Example 1, to obtain compression rings. The simultaneous machining time of inner and outer peripheral surfaces in Example 2 was as short as about 1/5 of that in Example 1.

### Examples 3-7

Eight compression rings were produced in each Example from the second cylindrical body of about 368 mm in outer diameter, about 339 mm in inner diameter and about 120 mm in width produced in Example 2, in the same manner as in Example 2, except that the ring width h1 and the radial thickness a1 were changed as shown in Table 1, with the nominal diameter d1 of 350 mm, and that the tangential force Ft was adjusted to have contact pressure of 0.08 MPa. Table 1 shows the sizes and tangential force Ft of the compression rings, and the Ft-related ratios. Table 2 shows the weight and unevenness of the compression rings measured in the same manner as in Example 1, and the ratios of their weights and conformability coefficients to those of Comparative Example 1, together with the results of Example 1 and Comparative Example 1. The conformability coefficient ratio (relative to Comparative Example 1) was calculated by the formula of K = 3Ftd1²/Eh1a1³, with the Young's modulus E being 215 GPa in the steel of Example 1 and 160 GPa in the cast iron of Comparative Example 1.

**Table 1**

| No. | h1 (mm) | a1 (mm) | h1/d1 (x 10⁻²) | a1/d1 (x 10⁻²) | h1·a1/d1² (x10⁻⁴) | Ft (N) | Ft/d1 (N/mm) | Tr⁽¹⁾ |
|---|---|---|---|---|---|---|---|---|
| Example 1 | 5 | 9.5 | 1.4 | 2.7 | 3.9 | 70 | 0.2 | 0.71 |
| Example 3 | 4 | 7.5 | 1.1 | 2.1 | 2.5 | 56 | 0.16 | 0.57 |
| Example 4 | 6 | 9 | 1.7 | 2.6 | 4.4 | 84 | 0.24 | 0.86 |
| Example 5 | 6.5 | 10 | 1.9 | 2.9 | 5.3 | 91 | 0.26 | 0.93 |
| Example 6 | 3.5 | 7 | 1.0 | 2.0 | 2.0 | 49 | 0.14 | 0.5 |
| Example 7 | 3 | 6 | 0.9 | 1.7 | 1.5 | 42 | 0.12 | 0.43 |
| Com. Ex. 1 | 7 | 10.5 | 2.0 | 3.0 | 6.0 | 98 | 0.28 | 1 |

| | | | | | | | | |
|---|---|---|---|---|---|---|---|---|
| Note: (1) Tr means a tension reduction ratio. | | | | | | | | |

**Table 2**

| No. | Weight (g) | Weight Ratio⁽¹⁾ | Unevenness (mm) | | Fr⁽²⁾ |
|---|---|---|---|---|---|
| | | | Radial Direction | Circumferential Direction | |
| Example 1 | 397 | 0.72 | 0.011 | 0.044 | 1.01 |
| Example 3 | 252 | 0.46 | 0.013 | 0.056 | 2.04 |
| Example 4 | 451 | 0.82 | 0.007 | 0.040 | 1.18 |
| Example 5 | 541 | 0.99 | 0.008 | 0.038 | 0.86 |
| Example 6 | 206 | 0.38 | 0.016 | 0.072 | 2.51 |
| Example 7 | 152 | 0.28 | 0.019 | 0.098 | 3.99 |
| Com. Ex. 1 | 548 | 1 | 0.005 | 0.026 | 1 |

| | | | | | |
|---|---|---|---|---|---|
| Note: (1) A ratio of weight to that of Comparative Example 1. (2) Fr means a ratio of a conformability coefficient to that of Comparative Example 1. | | | | | |

It was confirmed that any of Examples 1 and 3-4 achieved such weight reduction and tension reduction as a weight ratio of 0.46-0.82 and a tension reduction ratio of 0.57-0.86 relative to those of the conventional cast iron ring, with such practically acceptable ring precision as unevenness of 0.007-0.013 mm in a radial direction and 0.040-0.056 mm in a circumferential direction. Though the steel ring of Example 5 had a smaller cross section than that of the cast iron ring of Comparative Example 1, it had a weight ratio of nearly 1 due to the density difference (density: 7.8 g/cm³ for steel and 7.0 g/cm³ for cast iron), and a 14-% poorer conformability coefficient due to the Young's modulus difference (Young's modulus: 215 GPa for steel and 160 GPa for cast iron). Both of Examples 6-7 achieved large weight reduction and tension reduction, despite slightly poorer ring precision (unevenness after machined: more than 0.015 mm in a radial direction, and more than 0.070 mm in a circumferential direction).

### Example 8

A second cylindrical body having an outer diameter of about 353 mm, an inner diameter of about 311 mm, and a width of about 90 mm was formed from a steel rod of 110 mm in outer diameter and 200 mm in length having a composition comprising by mass 0.36% of C, 0.27% of Si, 0.51% of Mn, 0.029% of P, 0.024% of S, 0.25% ofNi, and 12.08% of Cr, in the same manner as in Example 1. This second cylindrical body was annealed for spheroidization at 750°C for 21 hours, shot-blasted to remove oxide scale, roughly machined simultaneously on its inner and outer peripheral surfaces to a non-circular shape (cam shape) having a major diameter of 352 mm and a minor diameter of 346 mm, and then radially cut to obtain five non-circular rings. After quenching from 1000°C, and tempering at 600°C for 3 hours, each ring was finish-machined to obtain a compression ring having a nominal diameter d1 of 330 mm, a rectangular cross section having a ring width h1 of 7 mm and a radial thickness a1 of 10 mm, a barrel-shaped outer peripheral surface, and a double-step joint shape. The compression ring was provided on its entire surface with a nitrided layer of about 100 µm by gas nitriding at 570°C for 4 hours, and further on its outer peripheral surface with a CrN layer of about 50 µm by arc ion plating. A compound layer (white layer) formed on the surface by gas nitriding was removed by grinding before ion plating.

### [3] Thermal sag test

The thermal sag test was conducted according to JIS B 8037-5. The tangential force of each ring was measured before and after heating at 300°C for 3 hours in a state that the ring is closed to a nominal diameter, and the reduction ratio of the tangential force (tension reduction ratio in a tangent direction according to JIS) was evaluated. The evaluation results of five rings of Example 8 revealed that their average thermal sag resistance was 3.6%, and any of them was less than 4% with small variation.

### Comparative Example 2

A cast iron ring body corresponding to the second cylindrical body was produced by casting a cast iron melt having a composition comprising by mass 3.8% of C, 2.6% of Si, 0.5% ofMn, 0.16% ofP, 0.01% of S, 0.72% ofMo, and 0.68% of Cu, and formed into compression rings in the same manner as in Example 8 except for omitting nitriding and ion plating. As a result of the same thermal sag test as in Example 8, their average thermal sag resistance was 7.2%, indicating that Example 8 had extremely improved thermal sag resistance.

### Example 9

Using steel having the same composition as in Example 8, a second cylindrical body having an outer diameter of about 348 mm, an inner diameter of about 319 mm, and a width of about 125 mm was formed by ring rolling, heated again, and pressed in a direction perpendicular to the axis to form a non-circular cylindrical body having a major diameter of 351 mm and a minor diameter of 345 mm. In this pressing, lower and upper dies each having a predetermined elliptical shape were used. The non-circular cylindrical body was annealed for spheroidization, shot-blasted to remove oxide scale, machined on its inner and outer peripheral surfaces simultaneously, and radially cut to obtain five non-circular rings, in the same manner as in Example 8. Quenching, tempering, finish machining, nitriding and ion plating were successively conducted in the same manner as in Example 8, to form compression rings. The simultaneous machining time of inner and outer peripheral surfaces in Example 9 was as short as about 1/5 of that of Example 8.

### Example 10

The second cylindrical body having an outer diameter of about 353 mm, an inner diameter of about 311 mm, and a width of about 90 mm in Example 8 was machined by turning to I-shaped oil ring body having an nominal diameter d1 of 330 mm, a ring width h1 of 6.0 mm, and a radial thickness a1 of 4.5 mm as shown in Fig. 8. An entire surface of the oil ring body was subjected to nitriding.

### Example 11

The same steel rod having an outer diameter of 110 mm and a length of 200 mm as used in Example 8 was formed into a first cylindrical body having an outer diameter of about 180 mm and an inner diameter of about 50 mm, and then subjected to ring rolling to produce a second cylindrical body having an outer diameter of about 300 mm and an inner diameter of about 280 mm, in the same manner as in Example 1. Further, using a main roll and a mandrel for forming a second cylindrical body having the cross section shown in Fig. 9, ring rolling was conducted to form an oil ring body having an outer diameter of about 333 mm and an inner diameter of about 317 mm. Cutting, heat treatment, finish machining, nitriding, etc. were conducted to produce an oil ring body as in Example 10. As compared with Example 10, the machining time was extremely reduced in Example 11.

### Example 12

Five non-circular compression rings were produced in the same manner as in Example 9, except for using steel having a composition comprising by mass 0.86% of C, 0.27% of Si, 0.29% of Mn, 0.024% of P, 0.018% of S, 17.3% of Cr, 0.89% of Mo, and 0.11% of V. The same thermal sag test as in Example 8 revealed that their average thermal sag resistance was 2.9%, higher than that of Example 8.

### Example 13

A steel rod of 110 mm in outer diameter and 200 mm in length having a composition comprising by mass 0.48% of C, 0.21% of Si, 0.79% of Mn, 1.02% of Cr, and 0.22% of V was formed into a second cylindrical body having an outer diameter of about 353 mm, an inner diameter of about 311 mm, and a width of about 90 mm; annealed; shot-blasted to remove oxide scale; roughly machined on its inner and outer peripheral surfaces simultaneously to a non-circular (cam) shape having a major diameter of 352 mm and a minor diameter of 346 mm; and then radially cut to obtain five non-circular rings, in the same manner as in Example 1. Further, quenching, tempering, and finish machining were successively conducted in the same manner as in Example 1, to obtain compression rings each having a nominal diameter d1 of 330 mm, a rectangular cross section having a ring width h1 of 7 mm and a radial thickness a1 of 10 mm, a barrel-shaped outer peripheral surface, and a double-step joint shape. Each compression ring was provided with a nitrided layer by gas nitriding, and a cermet coating formed by high-velocity flame spraying.

### [4] Measurement of thermal conductivity

A sample cut out of the ring of Example 13 was polished, and measured with respect to thermal conductivity three times by a laser flash method. An average of the values measured three times was 38 W/mK, comparable to that of CV graphite cast iron.

### Thermal sag resistance

The same thermal sag test as in Example 8 was conducted on five rings of Example 13. As a result, all thermal sag resistance data were within 5%, and 4.8% on average, indicating small variation.

### Thermal conductivity and thermal sag resistance of Comparative Example 1

Cast iron having a composition of Comparative Example 1 was formed into a CV graphite cast iron ring body corresponding to the second cylindrical body of Example 13, and then formed into compression rings in the same manner as in Example 13 except for omitting nitriding and thermal spraying. The same thermal conductivity measurement and thermal sag test as in Example 13 revealed that Comparative Example 1 had average thermal conductivity of 36 W/mK and average thermal sag resistance of 7.0%, indicating that Example 13 had extremely improved thermal sag resistance.

### Example 14

Steel having the same composition as in Example 13 was formed into a non-circular cylindrical body having a major diameter of 351 mm and a minor diameter of 345 mm in the same manner as in Example 9. The non-circular cylindrical body was annealed, shot-blasted to remove oxide scale, machined on its inner and outer peripheral surfaces simultaneously, and radially cut to obtain five non-circular rings, in the same manner as in Example 13. Quenching, tempering, finish machining, nitriding and thermal spraying were conducted successively in the same manner as in Example 13, to form compression rings. The simultaneous machining time of inner and outer peripheral surfaces in Example 14 was as short as about 1/5 of that of Example 13.

### Example 15

The second cylindrical body having an outer diameter of about 353 mm, an inner diameter of about 311 mm and a width of about 90 mm, which was produced in Example 13, was machined by turning to produce an I-shaped oil ring body having a nominal diameter d1 of 330 mm, a ring width h1 of 6.0 mm and a radial thickness a1 of 4.5 mm as shown in Fig. 8. An entire surface of the oil ring body was nitrided.

### Example 16

Using steel having the same composition as in Example 13, a second cylindrical body having an outer diameter of about 300 mm and an inner diameter of about 280 mm was formed by ring rolling. The second cylindrical body was then formed into a ring blank body of an oil ring body having an outer diameter of about 333 mm and an inner diameter of about 317 mm in the same manner as in Example 11, and then to an oil ring body as in Example 15. The machining time in Example 16 was drastically shorter than in Example 15.

### Examples 17-20

Each steel having the composition shown in Table 3 was formed into five non-circular compression rings in the same manner as in Example 14. The same thermal conductivity measurement and thermal sag test as in Example 13 were conducted. The results are shown in Table 3, together with those of Example 13 and Comparative Example 1.

**Table 3**

| No. | Alloy Elements (% by mass)⁽¹⁾ | | | | | | | | | TC⁽²⁾ (W/mK) | TSR⁽³⁾ (%) |
|---|---|---|---|---|---|---|---|---|---|---|---|
| | C | Si | Mn | Cr | Mo | V | B | Ni | Cu | | |
| Example 13 | 0.48 | 0.21 | 0.79 | 1.02 | - | 0.22 | - | - | - | 38 | 4.8 |
| Example 17 | 0.56 | 0.18 | 0.82 | 0.88 | - | - | - | - | - | 49 | 6.3 |
| Example 18 | 0.61 | 0.31 | 0.91 | 0.82 | 0.31 | - | - | - | - | 38 | 5.2 |
| Example 19 | 1.05 | 0.24 | 0.42 | 1.51 | 0.05 | - | - | - | - | 35 | 4.6 |
| Example 20 | 0.58 | 1.34 | 0.72 | 0.69 | - | - | - | - | 0.04 | 31 | 5.9 |
| Com. Ex. 1 | 3.8 | 2.6 | 0.5 | 0.09 | - | 0.06 | - | 0.88 | 2.42 | 36 | 7.0 |

| | | | | | | | | | | | |
|---|---|---|---|---|---|---|---|---|---|---|---|
| Note: (1) P and S were contained as inevitable impurities in Examples 13 and 17-20, and Comparative Example 1. Cu was contained as an impurity in Example 20. (2) TC means thermal conductivity. (3) TSR means thermal sag resistance. | | | | | | | | | | | |

Examples 17-20 had thermal conductivity of 31-49 W/mK, and thermal sag resistance of 4.6-6.3%. Their thermal conductivities were more than 30 W/mK of spheroidal graphite cast iron, and some of them were 38 W/mK, and 49 W/mK, corresponding to those of CV graphite cast iron and flaky graphite cast iron. Their thermal sag resistance was less than 7%, and some of them were less than 6% and less than 5%.

### EFFECTS OF THE INVENTION

Because the piston ring of the present invention has a smaller ring width h1 than those of conventional large cast iron piston rings, it contributes to weight reduction as an engine part, and it enables tension reduction even at contact pressure adjusted to a conventional level, resulting in a reduced friction force, thereby contributing to improvement in fuel efficiency. The reduction of the radial thickness a1 also provides not only weight reduction and tension (tangential force) reduction, but also remarkable improvement in the conformability of a ring to a cylinder wall, resulting in excellent sealability.

The cross section reduction of a piston ring, which is not achieved by conventional rings of cast iron or cast steel, has been achieved by using steel having excellent ductility and high strength and toughness, which can be safely used without breakage even under an increased thermal load, and which makes it possible to produce a piston ring having a nominal diameter of 200 mm or more precisely by combination of a hot forging including ring rolling and machining. Hot forging including ring rolling can easily form a columnar steel block into a large-diameter ring blank body, thereby obtaining a large ring having a fine, defect-free structure having fiber flow in a circumferential direction for high strength and excellent thermal sag resistance.

A cylindrical body having a predetermined size can be pressed perpendicularly to its axis to form a compression ring having a non-circular (cam-like) free shape. Further, a ring blank body having a close shape to that of an oil ring body can be formed by a hot-forging step using a main roll and a mandrel each having a predetermined shape in a ring-rolling mill, resulting in less machining in a subsequent step.

Further, because steel containing easily nitridable alloy elements can be used, nitriding can be conducted in place of hard chromium plating conventionally used on the side surfaces, contributing to cost reduction. Because steel having excellent thermal sag resistance and heat resistance can be used, not only nitriding but also ion plating are usable, providing a large piston ring having conventionally impossible, excellent scuffing resistance.

## Claims

1. A piston ring having a nominal diameter d1 of 200 mm or more and less than 1100 mm, which is formed from a hot-forged, cylindrical steel body.

2. The piston ring according to claim 1, which has a ring width h1 and a nominal diameter d1 meeting the relation of 1 x 10⁻² < h1/d1 < 1.8 x 10⁻².

3. The piston ring according to claim 1 or 2, which has a radial thickness a1 and a nominal diameter d1 meeting the relation of 2 x 10⁻² < a1/d1 < 2.8 x 10⁻².

4. The piston ring according to any one of claims 1-3, wherein said ring width h1, said radial thickness a1 and said nominal diameter d1 meet the relation of 2 x 10⁻⁴ < (h1 x a1)/(d1)² < 5 x 10⁻⁴.

5. The piston ring according to any one of claims 1-4, wherein a ratio (Ft/d1) of the tension Ft of said piston ring to said nominal diameter d1 is 0.1-0.25 N/mm.

6. The piston ring according to any one of claims 1-5, which comprises a base material made of steel selected from carbon steel, low-alloy steel, spring steel, bearing steel, and martensitic stainless steel.

7. The piston ring according to claim 6, wherein said base material has a composition comprising by mass 0.2-1.0% of C, 0.1-1.0% of Si, 0.1-1.0% of Mn, 10-20% of Cr, 0-0.6% of Ni, 0-1.5% of Mo, and 0-0.15% of V, the balance being Fe and inevitable impurities.

8. The piston ring according to claim 7, wherein said base material has a structure comprising chromium carbide dispersed in tempered martensite, and wherein said piston ring has a thermal sag resistance of 4% or less.

9. The piston ring according to claim 6, wherein said base material has a composition comprising by mass 0.45-1.10% of C, 0.15-1.60% of Si, 0.30-1.15% of Mn, 0.50-1.60% of Cr, 0-0.25% of V, 0-0.35% of Mo, and 0-0.005% of B, the balance being Fe and inevitable impurities.

10. The piston ring according to claim 9, wherein said base material has thermal conductivity of 30 W/mK or more.

11. The piston ring according to claim 9 or 10, wherein said substrate has a structure comprising carbide dispersed in tempered martensite, and wherein said piston ring has thermal sag resistance of 8% or less.

12. The piston ring according to any one of claims 1-11, which is provided on its outer peripheral sliding surface with one or more coating layers selected from the group consisting of a nitrided layer, a plating layer, a thermally sprayed layer, a chemical conversion treatment layer, and an ion-plated layer.

13. The piston ring according to any one of claims 1-12, which is provided on its side surfaces with one or more coating layers selected from the group consisting of a nitrided layer, a plating layer, and a chemical conversion treatment layer.

14. A piston ring blank body, which is a cylindrical steel body having a nominal diameter d1 of 200 mm or more and less than 1100 mm, and having a structure having fiber flow in a circumferential direction.

15. The piston ring blank body according to claim 14, which has a non-circular cross section perpendicular to an axis thereof to be used for a compression ring.

16. The piston ring blank body according to claim 14, which has pluralities of valleys at constant axial intervals at least on an outer peripheral surface thereof to be used for an oil ring.

17. A method for producing a piston ring having a nominal diameter d1 of 200 mm or more and less than 1100 mm, comprising
a first hot-forging step of heating a columnar steel block cut to a predetermined length, and upsetting it to a disc-shaped body by pressing;
a second hot-forging step of forming a recess in a center portion of said disc-shaped body by a core punch, and boring the recess to form a first cylindrical body;
a third hot-forging step of expanding the diameter of said first cylindrical body by a ring-rolling mill to form a second cylindrical body; and
a step of machining said second cylindrical body to a piston ring.

18. The method for producing a piston ring according to claim 17, wherein said second cylindrical body is pressed in a direction perpendicular to its axis after said third hot-forging step, so that said second cylindrical body has a non-circular cross section perpendicular to the axis.

19. The method for producing a piston ring according to claim 17, wherein a shaped roll is used in said third hot-forging step, to provide said second cylindrical body with pluralities of valleys at constant axial intervals at least on the outer peripheral surface.
